(19) Europäisches Patentamt
European Patent Office
Office européen des brevets

(11) **EP 3 832 301 A1**

(12) **DEMANDE DE BREVET EUROPEEN**

(43) Date de publication:
**09.06.2021 Bulletin 2021/23**

(21) Numéro de dépôt: **20211536.6**

(22) Date de dépôt: **03.12.2020**

(51) Int Cl.:
*G01N 29/22* (2006.01)     *G01N 29/32* (2006.01)
*G01N 29/032* (2006.01)    *G01N 29/24* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **06.12.2019   FR 1913875**

(71) Demandeur: **Commissariat à l'Energie Atomique et aux Energies Alternatives
75015 Paris (FR)**

(72) Inventeurs:
• **BOUTAMI, Salim**
  **38054 GRENOBLE CEDEX 09 (FR)**
• **FOURNIER, Maryse**
  **38054 GRENOBLE CEDEX 09 (FR)**

(74) Mandataire: **Cabinet Camus Lebkiri
25 rue de Maubeuge
75009 Paris (FR)**

(54) **DISPOSITIF POUR LA CARACTÉRISATION PHOTO-ACOUSTIQUE D'UNE SUBSTANCE GAZEUSE ET PROCÉDÉ DE FABRICATION D'UN TEL DISPOSITIF**

(57) Un aspect de l'invention concerne un dispositif (1) pour la caractérisation photo-acoustique d'une substance gazeuse. Le dispositif comprend une chambre (3) destinée à contenir la substance gazeuse à caractériser et dans laquelle un faisceau lumineux (F) est injecté. La chambre est délimitée notamment par une face interne (12, 22), sur laquelle une partie du faisceau lumineux se réfléchit. Cette face interne est gravée de manière à présenter des évidements (14), chaque évidement étant délimité latéralement par une surface latérale dont une partie au moins est inclinée, par rapport à un plan moyen (P1, P2) de ladite face interne, d'un angle d'inclinaison donné (a).

L'invention concerne également un procédé de fabrication d'un tel dispositif.

**Fig. 4**

EP 3 832 301 A1

**Description**

**DOMAINE TECHNIQUE DE L'INVENTION**

Le domaine technique de l'invention est celui des dispositifs pour la caractérisation photo-acoustique d'une substance gazeuse, par exemple pour détecter la présence d'un ou plusieurs éléments gazeux dans cette substance gazeuse, ou pour mesurer la concentration d'un ou plusieurs de ces éléments.
L'invention concerne en particulier un tel dispositif, intégré sur une puce en semi-conducteur. L'invention concerne aussi un procédé de fabrication d'un tel dispositif.

**ARRIERE-PLAN TECHNOLOGIQUE DE L'INVENTION**

Pour mesurer la concentration d'un élément particulier présent en faible quantité dans un mélange gazeux (ou dans un gaz), il est connu de remplir une chambre avec le mélange gazeux en question, puis d'injecter un rayonnement lumineux dans cette chambre, le rayonnement lumineux étant choisi de manière à être absorbé par l'élément dont veut mesurer la concentration, de préférence sélectivement (c'est-à-dire seulement par cet élément). Ce rayonnement lumineux a donc un spectre qui, en général, est situé dans l'infra-rouge moyen, par exemple entre 3 et 10 microns. En absorbant ce rayonnement, le mélange gazeux s'échauffe. La puissance lumineuse du rayonnement injecté est alors modulée, à une fréquence de modulation située dans le domaine sonore ou ultrasonore. L'échauffement en question est donc lui aussi modulé dans le temps, ce qui, dans le mélange gazeux, génère une onde acoustique ayant la fréquence de modulation en question. L'amplitude de cette onde acoustique, qui renseigne sur la concentration de l'élément à détecter, est mesurée grâce à un microphone. Pour rendre un tel dispositif de détection plus sensible, la fréquence de modulation peut être choisie égale à ou proche d'une fréquence de résonnance de la cavité acoustique que constitue la chambre.
Ces dernières années ont vu le développement de dispositifs compacts de détection ou de mesure par effet photo-acoustique, réalisés en semi-conducteurs en utilisant des techniques de fabrications dérivées de l'industrie micro-électronique.
Le document FR 3019653, par exemple, décrit un dispositif de détection photo-acoustique intégré, réalisé en gravant deux substrats en silicium puis en les scellant l'un sur l'autre pour délimiter des chambres destinées à recevoir la substance gazeuse à caractériser (ce dispositif, qui est du type « double Helmholtz différentiel », comprend deux chambres reliées par des capillaires).
La source lumineuse employée, en l'occurrence un laser à cascade quantique (ou QCL, selon l'acronyme anglais de « Quantum Cascade Laser ») qui émet dans l'infrarouge moyen, est couplée optiquement à l'une de ces chambres par un guide d'onde intégré. Du côté de cette chambre, ce guide a une extrémité élargie et est pourvu d'un réseau de diffraction dit de découplage, ce qui permet d'injecter le rayonnement lumineux dans la chambre sous la forme d'un faisceau lumineux qui, au moins dans une direction, est peu divergent. Ce faisceau lumineux se propage ensuite dans la chambre, en se réfléchissant notamment sur une face supérieure de la chambre, rendue réfléchissante par une couche d'or déposée sur cette face.
En l'absence de traitement réfléchissant, une partie importante de la puissance du faisceau lumineux en question serait perdue, lors de la réflexion sur cette face supérieure. En effet, lors d'une réflexion sur une face de silicium nue (c'est-à-dire sans couche réfléchissante), une partie importante du faisceau lumineux serait transmise dans le silicium, puis le traverserait pour sortir finalement du dispositif (on notera que, aux longueurs d'onde employées, le silicium est essentiellement transparent), réduisant ainsi la puissance lumineuse moyenne dans la chambre, et donc l'échauffement du gaz, ce qui réduirait d'autant la sensibilité de détection du dispositif.
Le fait de rendre une ou plusieurs faces de la chambre réfléchissantes grâce à un dépôt métallique permet donc de mieux confiner le rayonnement lumineux dans la chambre. Mais, en contrepartie, ces couches métalliques déposées en surface sont à l'origine d'un bruit, de type photo-acoustique, qui peut perturber le fonctionnement du dispositif et qui réduit sa sensibilité.
En effet, même dans l'infrarouge moyen, le coefficient de réflexion en puissance, sur une couche d'or, est de 98% environ. Et dès que la couche a une épaisseur d'une centaine de nanomètre environ, son coefficient de transmission est proche de 0%. La fraction de la puissance lumineuse incidence qui n'est pas réfléchie par la couche, qui représente environ 2% de cette puissance incidente, est donc absorbée dans la couche, ce qui cause un échauffement de la couche, modulé à la fréquence de modulation mentionnée plus haut.
Cet échauffement modulé de la couche d'or est la source d'une onde acoustique parasite, qui s'ajoute à l'onde acoustique produite par l'échauffement du gaz à détecter. Une absorption parasite de 2% au niveau d'une face réfléchissante de la cavité peut paraître faible, mais elle peut en fait perturber notablement la mesure car l'absorption dans la substance gazeuse à caractériser est généralement assez faible elle aussi.
Dans ce contexte, il serait donc souhaitable de disposer d'un dispositif pour la caractérisation photo-acoustique d'une substance gazeuse qui permette un confinement efficace du rayonnement lumineux, dans la chambre destinée à recevoir la substance gazeuse à caractériser, tout en évitant le problème de bruit photo-acoustique que causerait un revêtement réfléchissant métallique.

**RESUME DE L'INVENTION**

Pour résoudre au moins en partie le problème mentionné ci-dessus, on propose un dispositif pour la caractérisation photo-acoustique d'une substance gazeuse, le dispositif comprenant :

- une source lumineuse, émettant un rayonnement lumineux, et

- une chambre destinée à contenir la substance gazeuse à caractériser, la chambre étant délimitée notamment par une première paroi, formée dans un matériau au moins partiellement transparent pour ledit rayonnement, ladite paroi ayant :

  - une face interne, sensiblement plane, située du côté de la chambre, et

  - une face externe, la majeure partie de la face externe étant plane, contenue dans un même plan, et sensiblement parallèle à un plan moyen de la face interne.

La source lumineuse est associée optiquement à la chambre de manière à injecter ledit rayonnement lumineux dans la chambre, sous la forme d'un faisceau lumineux, une partie au moins du faisceau lumineux se réfléchissant sur la face interne de la première paroi.

Et, de manière remarquable, la face interne de la première paroi est gravée de manière à présenter des évidements, chaque évidement étant délimité latéralement par une surface latérale, une partie de ladite surface latérale, qui est éclairée par ledit faisceau lumineux, étant inclinée, par rapport au plan moyen de ladite face interne, d'un angle d'inclinaison $\alpha$ donné.

En l'occurrence, l'angle d'inclinaison $\alpha$ satisfait l'inégalité F1 suivante : $\alpha - \sin^{-1}(\frac{\sin\alpha}{n}) > i_C$  (F1).

$i_C$ est l'angle critique de réflexion totale interne dans ledit matériau et n est l'indice optique dudit matériau.

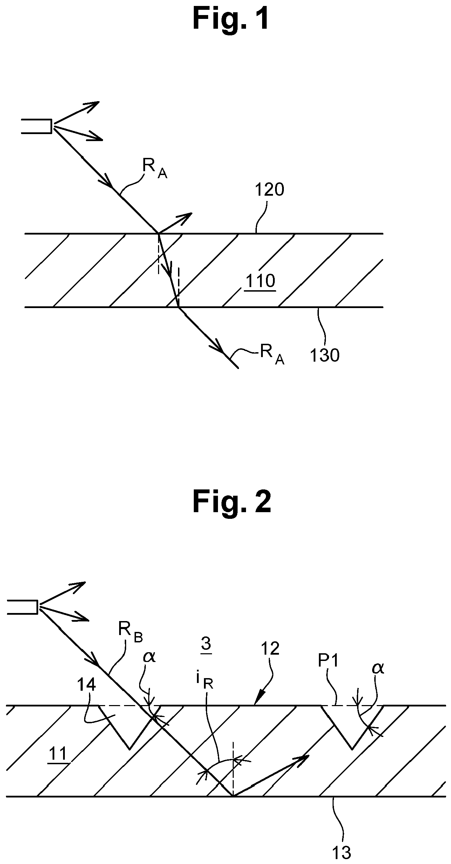

Dans un dispositif qui comprendrait une première paroi 110 dont la face interne 120 serait complètement plane, sans les évidements mentionnés ci-dessus, une partie du faisceau lumineux qui atteint cette face interne sortirait du dispositif après avoir traversé la première paroi, comme cela est représenté sur la figure 1.

En effet, sans les évidements en question, un rayon lumineux $R_A$ qui atteint la face interne 120 de la première paroi 110 serait réfracté par celle-ci. Puis, après avoir traversé cette paroi, ce rayon rencontrerait une face externe 130 de la paroi 110 sous un angle nécessairement inférieur à l'angle critique de réflexion totale interne, puisque les faces interne 120 et externe 130 de cette paroi 110 sont sensiblement parallèles entre elles. Ce rayon lumineux $R_A$ sortirait alors du dispositif par la face externe 130 en question, ce qui causerait, dans la chambre, une perte de puissance lumineuse.

Graver des évidements, dont la surface latérale est inclinée par rapport au plan moyen P1 de la face interne 12 (figure 2), permet, pour un rayon lumineux $R_B$ qui rencontre cette surface latérale, d'augmenter l'angle d'incidence avec lequel ce rayon rencontre, ensuite, la face externe 13 de la première paroi 11 (par rapport à une face interne qui serait dépourvue d'évidement).

Or on peut montrer par des calculs d'angles réfractés que tout rayon lumineux, qui est réfracté par la partie de la surface latérale de l'évidement inclinée de l'angle d'inclinaison a, atteint ensuite la face externe 13 de la première paroi 11 avec un angle d'incidence $i_R$ qui satisfait la condition F2 suivante :

$$\alpha - \sin^{-1}(\frac{\sin\alpha}{n}) < i_R < \alpha + \sin^{-1}(\frac{\cos\alpha}{n})  \text{(F2)}.$$

Choisir l'angle d'inclinaison $\alpha$ suffisamment grand, de manière à ce qu'il satisfasse l'inégalité F1, permet donc que l'angle d'incidence $i_R$ soit supérieur à l'angle critique $i_c$ de réflexion totale interne, $i_R > i_c$, et cela quelle que soit la direction initiale (dans la chambre) du rayon lumineux considéré.

Comme l'angle d'incidence $i_R$ est alors supérieur à l'angle critique $i_c$, chacun de ces rayons lumineux est totalement réfléchi par la face externe 13 de la première paroi (par réflexion totale interne), et est ainsi renvoyé en direction de la chambre.

Avec ce dispositif, la réflexion du rayonnement lumineux, qui permet de le renvoyer vers la chambre, est réalisée par réflexion totale interne. Contrairement à une réflexion sur une couche métallique, cette réflexion est donc réalisée sans absorption, ce qui est particulièrement intéressant puisque l'on évite ainsi de générer le bruit photo-acoustique mentionné en préambule.

On notera que l'angle critique ic de réflexion totale interne désigne, comme cela est l'usage, l'angle d'incidence limite au-delà duquel un rayon lumineux est totalement réfléchi, à l'interface entre le matériau en question et l'espace situé au-delà de la première paroi, à l'extérieur du dispositif. Lorsque cet espace est occupé par une substance ayant un indice optique proche de 1, comme de l'air ou une autre substance gazeuse, l'expression de l'angle critique ic est donnée par la formule F3 ci-dessous, où n est l'indice optique du matériau formant la première paroi, à la longueur d'onde moyenne du rayonnement lumineux émis par la source :

$$i_C = \sin^{-1}(1/n) \quad (F3).$$

Si la face externe de la première paroi était recouverte d'un autre matériau, ayant un indice optique n2 (indice optique à la longueur d'onde moyenne du rayonnement lumineux), l'expression de l'angle critique ic serait donnée par la formule F4 ci-dessous :

$$i_C = \sin^{-1}(n2/n) \quad (F4).$$

La face interne de la première paroi est sensiblement plane, en ce sens que toute une partie de cette face interne est plane, située dans un même plan moyen P1 (figure 2). Mais cette face comprend aussi des portions en creux correspondant aux évidements en question. En d'autres termes, la face interne comprend plusieurs portions planes et situées dans un même plan qui constitue le plan moyen P1, ainsi que des portions situées hors de ce plan (au niveau des évidements). Les portions de la face interne situées dans le plan moyen P1 peuvent par exemple représenter la majeure partie de l'aire de cette face interne (aire mesurée en projection sur le plan moyen P1).

L'angle d'inclinaison α est l'angle formé entre, d'une part, le plan moyen P1, et, d'autre part, la partie de la surface latérale de l'évidement mentionnée plus haut, qui est éclairée par le faisceau lumineux injecté dans la cavité (partie qui peut correspondre par exemple à une facette plane formant l'une des portions de la surface latérale de l'évidement). Comme illustré sur la figure 2, l'angle d'inclinaison α désigne plus précisément l'angle d'ouverture du secteur angulaire creux (sans matériau) qui s'étend du plan moyen P1 jusqu'à la partie de la surface latérale mentionnée ci-dessus. Ainsi, à titre d'exemple, si les évidements étaient extrêmement peu profonds, l'angle d'inclinaison α serait proche de 0 degrés.

Ici, l'angle d'inclinaison α est inférieur à 90 degrés.

Outre les caractéristiques présentées ci-dessus, le dispositif qui vient d'être présenté peut comprendre une ou plusieurs caractéristiques optionnelles et non limitatives parmi les suivantes, considérées individuellement ou selon toutes les combinaisons techniquement possibles :

- la majeure partie de la face interne de la première paroi, voire la totalité de cette face, est dépourvue de métal ;

- la majeure partie de la face externe de la première paroi, voire la totalité de cette face, est dépourvue de métal ;

- toute la partie de la face externe qui est située en vis-à-vis desdits évidement, ou tout au moins l'essentiel (c'est-à-dire la majeure partie) de cette partie de la face externe est plane ;

- la face externe est plane ;

- la surface latérale qui délimite l'évidement considéré est formée de plusieurs facettes planes, pour au moins certains desdits évidements ;

- chacune desdites facettes est inclinée, par rapport au plan moyen de ladite face interne, dudit angle d'inclinaison α ;

- au moins certains desdits évidements, dont la surface latérale est formée de plusieurs facettes planes, sont réalisés sous la forme de rainures rectilignes ayant une section en forme de V ;

- lesdites rainures sont parallèles entre elles, et dans lequel chacune desdites rainures s'étend le long d'un axe transverse (y) qui forme, avec une direction moyenne de propagation du faisceau lumineux injecté dans la chambre, un angle compris entre 70 et 90 degrés ;

- la direction moyenne de propagation du faisceau lumineux est parallèle à la face interne de la première paroi, à plus ou moins 20 degrés près ;

- au moins certains desdits évidements, dont la surface latérale est formée de plusieurs facettes planes, ont une forme de pyramide creuse à base carrée ou rectangulaire ;

- lesdites pyramides sont disposées chacune de sorte que l'un des côtés de leur base soit parallèle à un même axe transverse, et dans lequel cet axe transverse forme, avec une direction moyenne de propagation du faisceau lumineux injecté dans la chambre, un angle compris entre 70 et 90 degrés ;

- la première paroi est formée dans un substrat essentiellement monocristallin, dans lequel le plan moyen de ladite face interne, et lesdites facettes planes, sont parallèles à différents plans cristallins dudit substrat ;

- le substrat est formé de silicium, dans lequel le plan moyen de ladite face interne est parallèle à un plan cristallin dont les indices de Miller sont 1,0,0 ou 1,1,0 et lesdites facettes sont parallèles à des plans cristallins dont les indices de Miller sont 1,1,1, ou 1,1,-1, ou 1,-1,1 ou -1,1,1 ;

- la chambre est délimitée également par une deuxième paroi formée dans ledit matériau, la deuxième paroi ayant une face interne, sensiblement plane, située du côté de la chambre, et une face externe, sensiblement plane et parallèle à la face interne de la deuxième paroi, la face interne de la deuxième paroi étant gravée de manière à présenter elle aussi des évidements, chaque évidement étant délimité latéralement par une surface latérale, une partie de ladite surface latérale, qui est éclairée par ledit faisceau lumineux, étant inclinée, par rapport à un plan moyen de la face interne de la deuxième paroi, dudit angle d'inclinaison a.

On peut prévoir aussi que lesdites rainures, ou lesdites pyramides, soient disposées de sorte que deux rainures, ou deux pyramides, situées l'une à la suite de l'autre le long d'un axe longitudinal, soient espacées, le long de l'axe longitudinal (x), d'une distance $d_i = x_{i+1} - x_i$ qui est égale, au moins à 20% près, à la quantité $d_{i,opt}$ suivante :

$$d_{i,opt} = H\left[\frac{1}{tan\alpha} + tan\left[\alpha + sin^{-1}\left[cos\left[\frac{\alpha + tan^{-1}\left(\frac{W.tan\alpha}{x_i tan\alpha + H}\right)}{n}\right]\right]\right]\right].$$

Dans la formule ci-dessus,

- les coordonnées $x_i$ et $x_{i+1}$ repèrent les positions respectives, le long de l'axe longitudinal, des deux fonds desdites deux rainures en V, ou repèrent les positions respectives, le long de l'axe longitudinal, des deux sommets desdites deux pyramides,

- l'axe longitudinal, qui est orthogonal audit axe transverse et qui est contenu dans le plan moyen de ladite face interne, a une origine qui est située au droit d'un point d'injection dudit rayonnement lumineux,

- H est la profondeur des rainures en V, ou des pyramides, mesurée perpendiculairement au plan moyen de ladite face interne, et

- W est la distance entre le point d'injection du rayonnement lumineux et le plan moyen de ladite face interne, mesurée perpendiculairement audit plan moyen.

Un autre aspect de l'invention concerne un procédé de fabrication d'un dispositif pour la caractérisation photo-acoustique d'une substance gazeuse, tel que décrit ci-dessus, le procédé comprenant les étapes suivantes :

- réalisation d'une chambre destinée à contenir la substance gazeuse à caractériser, la chambre étant délimitée notamment par une première paroi, formée dans un matériau, ladite paroi ayant une face interne, sensiblement plane et située du côté de la chambre, ainsi qu'une face externe, la majeure partie de la face externe étant plane, contenue dans un même plan, et sensiblement parallèle à un plan moyen de ladite face interne, et

- réalisation, ou montage sur le dispositif, d'une source lumineuse, émettant un rayonnement lumineux, la source lumineuse étant associée optiquement à la chambre de manière à injecter ledit rayonnement lumineux dans la chambre, sous la forme d'un faisceau lumineux, une partie au moins du faisceau lumineux se réfléchissant sur la face interne de la première paroi.

De manière remarquable, l'étape de réalisation de la chambre comprend une étape de réalisation d'évidements, gravés sur la face interne de la première paroi, chaque évidement étant délimité latéralement par une surface latérale, une partie de ladite surface latérale, qui est éclairée par ledit faisceau lumineux, étant inclinée, par rapport au plan moyen de ladite face interne, dudit angle d'inclinaison a.

Outre les caractéristiques présentées ci-dessus, le procédé qui vient d'être présenté peut comprendre une ou plusieurs caractéristiques optionnelles et non limitatives parmi les suivantes, considérées individuellement ou selon toutes les combinaisons techniquement possibles :

- la première paroi est formée dans un premier substrat, et l'étape de réalisation de la chambre comprend une étape de gravure d'une demi-cavité, dans le premier substrat, la demi-cavité ayant un fond formant ladite surface interne, l'étape de réalisation desdits évidements étant exécutée après l'étape de gravure de la demi-cavité ;

- le premier substrat est formé de silicium essentiellement monocristallin, le fond de cavité est parallèle à un plan cristallin dont les indices de Miller sont 1,0,0 ou 1,1,0, et l'étape de réalisation desdits évidements comprend les opérations suivantes :

  - réalisation d'une couche de protection recouvrant des faces latérales de la ladite demi-cavité,

  - dépôt d'un masque de protection sur le fond de ladite demi-cavité, le masque étant déposé à travers un pochoir et comprenant des orifices coïncidant avec les ouvertures des évidements à graver,

  - gravure humide du premier substrat, par action de potasse ou de tetramethylammonium hydroxide ;

  - retrait du masque et de la souche de protection.

- la chambre étant délimitée en outre par une deuxième paroi, qui est formée dans un deuxième substrat fait dudit matériau, la deuxième paroi ayant une face interne, sensiblement plane, située du côté de la chambre, et une face externe, sensiblement plane et parallèle à la face interne de la deuxième paroi, l'étape de réalisation de la chambre comprend en outre :

  - une étape de réalisation d'évidements, gravés sur la face interne de la deuxième paroi, chaque évidement étant délimité latéralement par une surface latérale, une partie de ladite surface latérale, qui est éclairée par ledit faisceau lumineux, étant inclinée, par rapport à un plan moyen de la face interne de la deuxième paroi, dudit angle d'inclinaison a, et

  - un scellement du deuxième substrat sur le premier substrat, de manière à ce que les faces internes respectives de la première paroi et de la deuxième paroi soient situées en vis-à-vis l'une de l'autre, de part et d'autre de la chambre.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

[Fig. 1] La figure 1 représente schématiquement le trajet d'un rayon lumineux, dans un dispositif de caractérisation photo-acoustique conventionnel.

[Fig. 2] La figure 2 représente schématiquement le trajet d'un rayon lumineux, dans un dispositif de caractérisation photo-acoustique mettant en œuvre les enseignements de l'invention.

[Fig. 3] La figure 3 représente schématiquement un dispositif de caractérisation photo-acoustique selon un premier mode de réalisation, vu de côté.

[Fig. 4] La figure 4 représente schématiquement le dispositif de la figure 3, vu de côté.

[Fig. 5] La figure 5 représente schématiquement le trajet d'un rayon lumineux, dans un dispositif de la figure 3.

[Fig. 6] La figure 6 représente schématiquement un dispositif de caractérisation photo-acoustique selon un deuxième mode de réalisation, vu de côté.

[Fig. 7] La figure 7 est une vue schématique partielle du dispositif de la figure 6, vu de côté.

[Fig. 8] La figure 8 montre des résultats de simulations numériques, pour un dispositif mettant en œuvre les enseignements de l'invention.

[Fig. 9] La figure 9 montre des résultats de simulations numériques, pour un autre dispositif.

[Fig. 10] La figure 10 montre des résultats de simulations numériques, pour un encore un autre dispositif, de l'état de la technique.

[Fig. 11] La figure 11 représente schématiquement des étapes d'un procédé de fabrication d'un dispositif de caractérisation photo-acoustique mettant en œuvre les enseignements de l'invention.

[Fig. 12] La figure 12 représente plus en détail l'une des étapes du procédé de la figure 11.

[Fig. 13] La figure 13 représente schématiquement un enchainement d'opérations réalisées au cours de l'étape de la figure 12.

[Fig. 14] La figure 14 représente schématiquement d'autres d'opérations réalisées au cours de l'étape de la figure 12.

[Fig. 15] La figure 15 est une vue schématique en coupe d'un substrat, servant de base pour la fabrication d'un dispositif de caractérisation mettant en œuvre les enseignements de l'invention, après une étape de gravure profonde d'une demi-cavité, dans le substrat.

[Fig. 16] La figure 16 représente schématiquement le substrat de la figure 15, à un autre stade de son processus de structuration.

[Fig. 17] La figure 17 représente schématiquement le substrat de la figure 15, après réalisation d'une couche de protection protégeant des faces latérales de la demi-cavité.

[Fig. 18] La figure 18 représente schématiquement le substrat de la figure 15, après réalisation d'un masque de protection protégeant le fond de la demi-cavité.

[Fig. 19] La figure 19 représente schématiquement le substrat de la figure 15, après gravure d'évidements sur le fond de la demi-cavité.

[Fig. 20] La figure 20 représente schématiquement le substrat de la figure 15, après gravure des évidements et retrait de la couche et du masque de protection.

[Fig. 21] La figure 21 représente schématiquement le dispositif de caractérisation, dont une partie est formée par le substrat en question.

## DESCRIPTION DETAILLEE

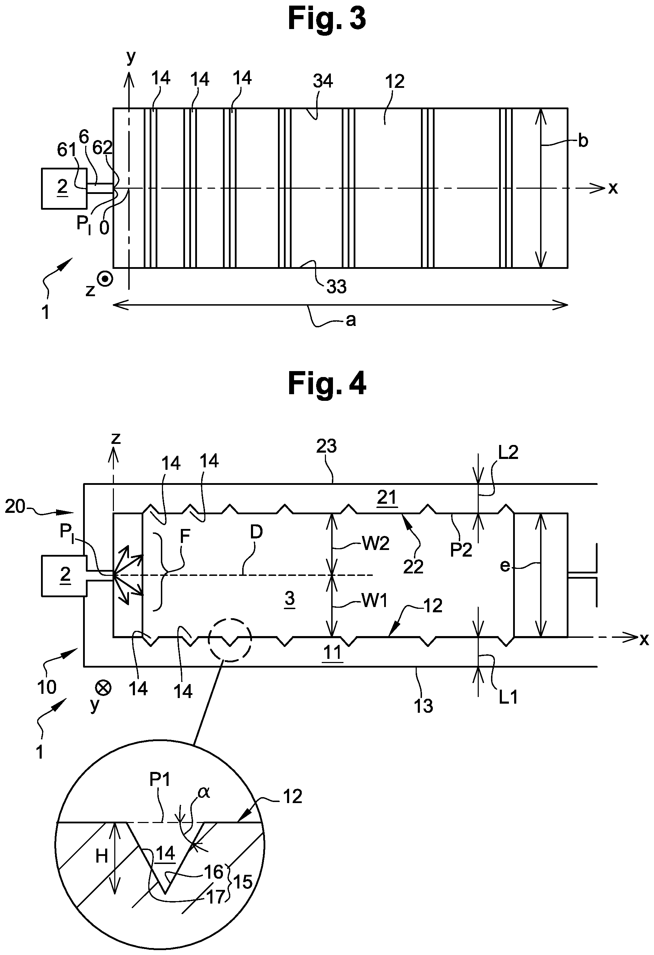

Comme déjà indiqué, l'invention concerne, entre autres, un dispositif 1 ; 1' pour la caractérisation photo-acoustique d'une substance gazeuse.
Le dispositif 1 ; 1' comprend notamment (voir les figures 3, 6 et 21) :

- une source lumineuse 2, configurée pour émettre un rayonnement lumineux,

- une chambre 3, destinée à contenir la substance gazeuse à caractériser,

- au moins un port fluidique 4 pour l'admission de la substance gazeuse dans la chambre et/ou pour le refoulement de cette substance gazeuse (ce ou ces ports ne sont pas représentés, sur les figures 3 à 7),

- au moins un microphone (non représenté sur les figures), pour capter une onde acoustique générée, dans la substance gazeuse à caractériser, par effet photo-acoustique.

Ici, le dispositif 1 ; 1' est un dispositif compact, intégré. Il est réalisé en structurant (et fonctionnalisant) différents substrats, en l'occurrence des substrats en silicium. Ici, la chambre 3 est réalisée plus particulièrement en scellant l'un sur l'autre un premier substrat 10 en silicium et un deuxième substrat 20 en silicium, le deuxième substrat 20 jouant en quelque sorte le rôle d'un capot.

Le dispositif 1 ; 1' peut comprendre une chambre supplémentaire en plus de la chambre 3 mentionnée ci-dessus, les deux chambres formant alors des cavités acoustiques couplées l'une à l'autre par des capillaires pour réaliser un détecteur de type « double Helmholtz différentiel », comme cela est décrit dans le document FR 3019653. Mais le dispositif 1 ; 1' peut aussi comprendre une seule chambre (en l'occurrence celle, 3, mentionnée ci-dessus).

On notera que l'invention concerne non seulement le dispositif 1 ; 1' présenté ci-dessus mais aussi un dispositif similaire à un stade intermédiaire de sa fabrication, ce dernier dispositif comprenant déjà la chambre 3 mais n'étant pas encore pourvu d'un microphone ou d'un port fluidique, par exemple.

De manière remarquable, au moins une face interne de la chambre 3 est gravée de manière à ce que cette face présente des évidements 14 ; 14' particuliers, chacun de ces évidements étant délimité latéralement par une surface latérale dont une partie au moins est inclinée d'un angle d'inclinaison $\alpha$ donné par rapport à un plan moyen P1, P2 de la face interne en question.

Comme expliqué dans la partie intitulée « résumé de l'invention », grâce à cette inclinaison, la surface latérale de l'évidement 14 ; 14' dévie les rayons lumineux qui la rencontrent, lors de leur réfraction par cette surface, d'une manière telle que ces rayons lumineux rencontrent ensuite une face externe du substrat sous un angle d'incidence suffisamment grand pour qu'il y ait réflexion totale interne sur cette face externe. Cela permet alors de renvoyer ces rayons lumineux vers la chambre 3. Graver de tels évidements sur l'une au moins des faces internes de la chambre permet donc de renvoyer vers la chambre 3 une partie du rayonnement lumineux qui sortirait sinon de celle-ci. Comme le rayonnement lumineux est renvoyé vers la chambre 3 par réflexion totale interne, on évite ainsi les problèmes d'absorption et de bruit photo-acoustique qui se poseraient avec l'utilisation d'une couche métallique réfléchissante.

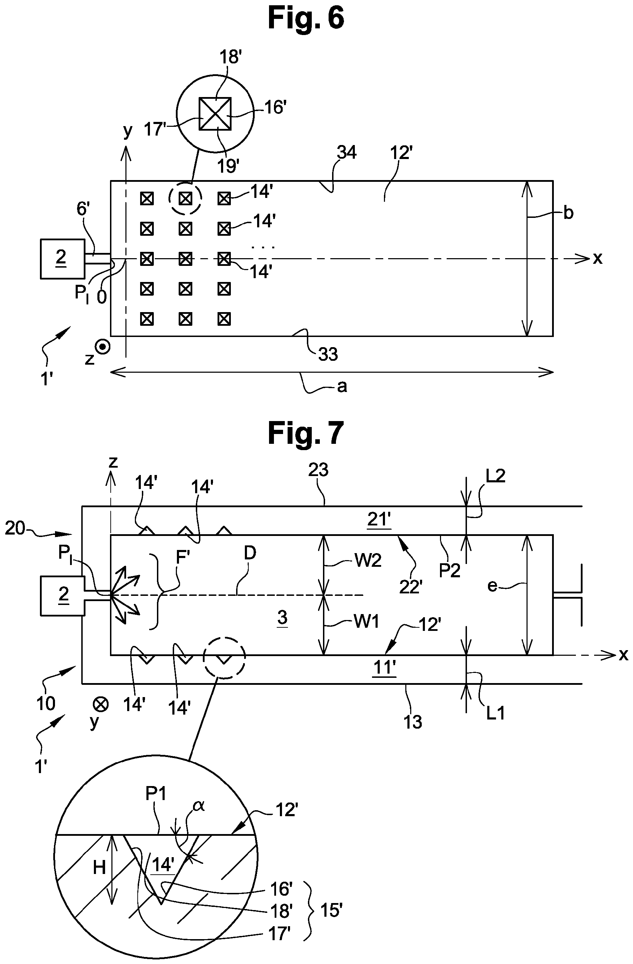

Un premier mode de réalisation du dispositif, 1, est représenté schématiquement sur les figures 3 et 4, et un deuxième mode de réalisation du dispositif, 1', est représenté schématiquement sur les figures 6 et 7. Ces deux modes de réalisation diffèrent principalement l'un de l'autre de par la forme des évidements 14 ; 14' mentionnés ci-dessus.

Dans le premier mode de réalisation, ces évidements 14 sont réalisés sous la forme de rainure rectilignes, en l'occurrence des rainures à section en forme de V. Dans le deuxième mode de réalisation, ces évidement 14' sont réalisés sous la forme de pyramides creuses (trous en forme de pyramides), à base carrée. Ces deux modes de réalisation ont néanmoins des nombreux points communs. Aussi, les éléments identiques ou correspondant de ces deux modes de réalisation seront autant que possible repérés par les mêmes signes de référence et ne seront pas décrits à chaque fois.

Dans ces deux modes de réalisation, la source lumineuse 2 du dispositif 1 ; 1' est un laser à semi-conducteur du type à cascade quantique (ou QCL, selon l'acronyme anglais de « Quantum Cascade Laser »). Le rayonnement lumineux qu'elle émet a un spectre situé majoritairement dans l'infra-rouge moyen, par exemple entre 3 microns et 10 microns.

Le ou les microphones du dispositif peuvent être des microphones intégrés de type MEM's (selon l'acronyme anglo-saxon de « Microelectromechanical systems », c'est-à-dire microsystème électromécanique).

Quant à la chambre 3, elle est délimitée (figures 4 et 7) :

- d'une part, par une première paroi 11 ; 11', inférieure, formée dans le premier substrat 10, et

- d'autre part, par une deuxième paroi 21 ; 21', supérieure, formée dans le deuxième substrat 20.

La première paroi 11 ; 11' et la deuxième parois 21 ; 21' ont chacune :

- une face interne 12, 22 ; 12', 22' située du côté de la chambre 3, et

- une face externe 13, 23 sensiblement parallèle à la face interne 12, 21 ; 12', 22' de la paroi considérée et située à l'extérieur de la chambre 3.

Les première et deuxième parois 11, 21 ; 11', 21' sont sensiblement planes, en ce sens que leurs faces externes et internes sont elles-mêmes sensiblement planes et parallèles l'une à l'autre.

Les faces externe et interne de chacune des parois 11, 21 ; 11', 21' sont sensiblement parallèles entre elles, en ce sens qu'elles forment entre elles un angle inférieur à 5 degrés. La face externe et la face interne de chacune de ces parois 11, 21 ; 11', 21' peuvent en particulier, comme ici, être exactement parallèles entre elles.

La face interne 12 ; 12' de la première paroi 11 ; 11' est sensiblement plane, en ce sens que toute une partie de cette face interne est plane, située dans un même plan moyen P1 (voir la figure 4). Mais cette face comprend aussi des portions en creux, et éventuellement en saillie, situées en dessous ou au-dessus du plan moyen P1. En d'autres termes, la face interne 12 ; 12' comprend plusieurs portions planes et situées dans un même plan, qui constitue le plan moyen P1, ainsi que des portions situées hors de ce plan. Les portions de la face interne 12 ; 12' situées dans ce plan moyen P1 peuvent représenter ici la majeure partie de l'aire de cette face (aire mesurée en projection sur le plan moyen P1).

La face interne 22 ; 22' de la deuxième paroi 21 ; 21' est elle aussi sensiblement plane, en ce sens que toute une partie de cette face interne 22 ; 22' est plane, située dans un même plan moyen P2. Cette face comprend toutefois, là aussi des portions en creux, et éventuellement en saillie, situées en dessous ou au-dessus du plan moyen P2.

Quant aux faces externes 13, 23 des première et deuxième parois 11, 21 ; 11', 21', elles sont ici complètement planes, et parallèles respectivement au plan moyen P1 et au plan moyen P2.

Les faces internes 12, 22 ; 12', 22' s'étendent selon un axe longitudinal x et selon un axe transverse y (ces deux axes, x et y, sont donc parallèles, chacun, au plan moyen P1 et au plan moyen P2). Ici, les faces internes 12, 22 ; 12', 22' ont chacune une forme d'ensemble rectangulaire. Les longueurs de leurs côtés, parallèlement à l'axe longitudinal x, et, respectivement, parallèlement à l'axe transverse y, sont notées a et b respectivement (figures 3 et 6). Ces longueurs peuvent, comme ici, être comprises entre 3 et 20 millimètres.

La direction perpendiculaire au plan moyen P1 de la face interne 12 ; 12' est repérée par un axe normal z. Les axes x, y et z introduits ci-dessus sont perpendiculaires deux à deux.

Les faces internes 12 et 22, ou 12 et, 22', qui forment les limites inférieure et supérieure de la chambre 3, sont séparées l'une de l'autre par une distance e qui peut être comprise entre 0,3 et 1,5 millimètres (la distance e est la distance, selon l'axe z, entre le plan moyen P1 de la face interne 12 ; 12' d'une part, et le plan moyen P2 de la face interne 22 ; 22' d'autre part).

Ici, la chambre 3 est donc plus étendue parallèlement aux faces internes 12, 22 ; 12', 22' que perpendiculairement à celles-ci et a ainsi une forme d'ensemble aplatie.

Les première et deuxième parois 11 et 21, ou 11' et 21', ont des épaisseurs respectives, notées L1 et L2, qui peuvent par exemple être comprises entre 0,2 et 0,6 millimètres. L'épaisseur L1 désigne la distance entre le plan moyen P1 et la face externe 13 de la première paroi, et l'épaisseur L2 désigne la distance entre le plan moyen P2 et la face externe 23 de la première paroi

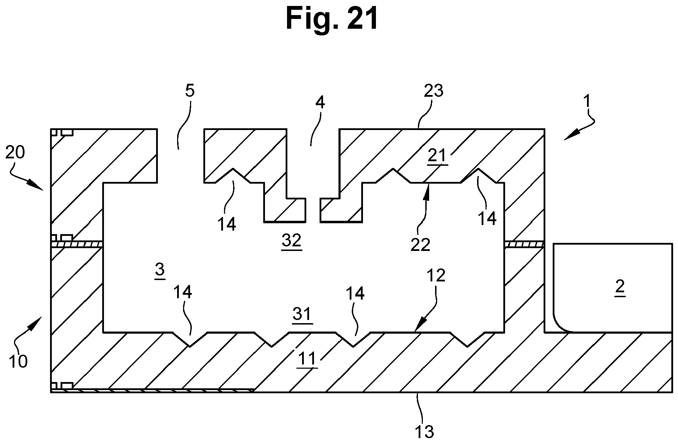

Ici, la chambre 3 est formée (figure 4 et 21) :

- d'une demi-cavité inférieure 31, formée dans le premier substrat 10 et dont le fond est constitué par la face interne 12 ; 12' de la première paroi 11 ; 11', et

- d'une demi-cavité supérieure 32, formée dans le deuxième substrat 20 et dont le fond est constitué par la face interne 22 ; 22' de la deuxième paroi 21 ; 21'.

Chacune de ces demi-cavités est formée en gravant en profondeur le substrat 10, 20 correspondant. Elle est donc délimitée par son fond et par une surface latérale, tout en restant ouverte du côté opposé à son fond. Les premier et deuxième substrats 10 et 20 sont scellés l'un sur l'autre en positionnant la demi-cavité supérieure 32 en vis-à-vis de la demi-cavité inférieure 31, au droit de celle-ci.

La source lumineuse 2 est associée optiquement à la chambre 3, c'est-à-dire couplée à celle-ci, de manière à injecter dans la chambre 3 le rayonnement lumineux qu'elle émet, sous la forme d'un faisceau lumineux F ; F'.

Pour cela, la source lumineuse 2 peut par exemple être couplée à un guide d'onde intégré, 6 (figure 3). Une première extrémité 61 du guide est alors couplée à la source lumineuse 2. Une deuxième extrémité 62 du guide, par laquelle sort le faisceau lumineux F, débouche dans la chambre 3. C'est cette solution qui est mise en œuvre dans le premier mode de réalisation, des figures 3 et 4. La deuxième extrémité 62 du guide peut par exemple être située à la jonction entre les deux substrats 10 et 20.

Le centre de la deuxième extrémité 62 du guide, par laquelle sort le faisceau lumineux F, est appelé point d'injection $P_I$ dans la suite (cette deuxième extrémité a une section petite, par rapport à celle de la chambre 3 ; le faisceau lumineux F est donc injecté dans la chambre à partir d'une zone localisée, centrée sur le point d'injection $P_I$).

La deuxième extrémité 62 du guide peut, comme ici, comprendre une partie élargie et pourvue d'un réseau de diffraction de découplage, comme cela est décrit par exemple dans le document FR 3019653. Cela permet de réduire la divergence du faisceau lumineux F. Le réseau de diffraction peut par exemple être orienté de manière à ce qu'une direction moyenne de propagation du faisceau lumineux, D, en sortie du guide, soit parallèle à l'axe longitudinal x, ou tout au moins ne s'écarte pas de plus de 20 degrés (voire de 10 degrés) de l'axe longitudinal x. Le réseau de diffraction peut être orienté par ailleurs de manière à ce que la direction de plus faible divergence du faisceau lumineux F soit parallèle à l'axe transverse y. Le faisceau lumineux F a alors une divergence plus marquée parallèlement à l'axe z (le faisceau a alors une section transverse plus allongée dans la direction z que dans la direction y). Le faisceau lumineux se propage alors en quelque sorte sous la forme d'une nappe en forme d'éventail, peu épaisse parallèlement à l'axe transverse y.

Cette disposition permet que les réflexions du faisceau lumineux sur les faces internes de la chambre aient lieu essentiellement sur la face interne 12 de la première paroi 11 (face interne inférieure), et sur la face interne 22 de la deuxième paroi 21 (face interne supérieure), plutôt que sur des faces latérales internes 33 et 34 de la chambre 3 (faces latérales internes qui sont parallèles au plan (x,z) - voir la figure 3). Cela est intéressant car, ici, ce sont précisément les faces internes 12 et 22 qui sont pourvues des évidements particuliers 14, qui permettent une réflexion efficace du faisceau lumineux.

Dans le deuxième mode de réalisation, des figures 6 et 7, le guide d'onde mentionné plus haut est omis. Un port de sortie de la source lumineuse 2, d'où sort le faisceau lumineux F', est alors placé directement en vis-à-vis d'un port d'entrée dans la chambre, 6', (c'est-à-dire en vis-à-vis d'une ouverture d'entrée dans la chambre), sans composant optique intermédiaire. Le faisceau lumineux F' peut alors avoir une divergence assez importante, par exemple de quelques dizaines de degrés, aussi bien parallèlement à l'axe transverse y que parallèlement à l'axe normal z. Ici, le port d'entrée du faisceau lumineux, 6', est situé à la jonction entre le deux substrats 10 et 20. Là encore, le faisceau lumineux F' est injecté dans la chambre à partir d'une zone peu étendue par rapport à la section de la chambre (cette zone correspond par exemple à l'ouverture d'entrée en question), centrée sur un point appelé point d'injection $P_I$. Comme précédemment, le faisceau lumineux F' a une direction moyenne de propagation D parallèle à l'axe longitudinal x, ou tout au moins ne s'écarte pas de plus de 20 degrés (voire de 10 degrés) de l'axe longitudinal x.

Dans les différents modes de réalisation considérés ici, une partie du faisceau lumineux F ; F' injecté dans la chambre 3 se réfléchit sur la face interne 12 ; 12' de la première paroi, et une autre partie de ce faisceau se réfléchit sur la face interne 22 ; 22' de la deuxième paroi.

La face interne 12 ; 12' de la première paroi 11 ; 11' est gravée de manière à présenter les évidements 14 ; 14' mentionné plus haut. Chacun de ces évidements est délimité latéralement par une surface latérale 15 ; 15', une partie 16 ; 16' de ladite surface latérale, qui est éclairée par le faisceau lumineux F ; F', étant inclinée, par rapport au plan moyen P1 de ladite face interne 12 ; 12', de l'angle d'inclinaison $\alpha$ mentionné plus haut.

La face interne 22 ; 22' de la deuxième paroi 21 ; 21' est gravée de manière à présenter elle aussi de tels évidements 14 ; 14'.

L'angle d'inclinaison $\alpha$ satisfait l'inégalité F1 qui a été présentée plus haut dans la partie intitulée « résumé de l'invention » :

$$\alpha - \sin^{-1}(\frac{\sin \alpha}{n}) > i_C \quad (F1).$$

Comme déjà expliqué, choisir l'angle d'inclinaison $\alpha$ suffisamment grand, de manière à ce qu'il satisfasse cette inégalité, permet que chaque rayon réfracté par la partie 16; 16' de la surface latérale 15; 15' en question subisse ensuite une réflexion totale interne sur la face externe 13, 23 de la paroi 11, 21 ; 11', 21' considérée.

Pour satisfaire la condition F1, l'angle d'inclinaison $\alpha$ est choisi de manière à être supérieur à un angle d'inclinaison limite $\alpha_L$ qui correspond au cas d'égalité, dans la formule F1 :

$$\alpha_L - \sin^{-1}(\frac{\sin \alpha_L}{n}) = i_C \quad (F5).$$

Le matériau qui forme les première et deuxième parois est ici du silicium. Dans le domaine de longueurs d'onde considéré ici, compris entre 3 et 10 microns, ce matériau a un indice optique égal à 3,4. L'angle critique ic est donc égal à 17 degrés environ (c.f. : formule F3 indiquée plus haut), et l'angle d'inclinaison limite $\alpha_L$ est alors égal à 24 degrés environ.

Dans ces deux modes de réalisation, pour chaque évidements 14 ; 14', la surface latérale 15 ; 15' qui délimite latéralement l'évidement considéré est formée de plusieurs facettes planes 16, 17 ; 16', 17', 18', 19' (figures 4 et 7). Et chacune de ces facettes est inclinée, par rapport au plan moyen P1, P2 de ladite face interne 12, 22 ; 12', 22' considérée, dudit angle d'inclinaison $\alpha$

Dans le mode de réalisation des figures 3 et 4, pour lequel les évidements 14 sont réalisés sous la forme de rainures en V, les facettes 16 et 17 en question correspondent aux deux faces latérales de la rainure considérée (ces faces se raccordent l'une à l'autre le long de l'arrête qui forme le fond de la rainure en V).

Et dans le mode de réalisation des figures 6 et 7, pour lequel les évidements 14' sont réalisés sous la forme de pyramides creuses, les facettes 16', 17', 18', 19' mentionnées ci-dessus correspondent aux quatre faces de la pyramide considérée.

Pour ces deux modes de réalisation, les substrats en silicium 10 et 20 sont essentiellement monocristallins (par substrat « essentiellement monocristallin » on entend un substrat dont la majeure partie du volume, voire plus de 90% du volume, est monocristallin, ce substrat pouvant néanmoins comprendre un certain nombre de défauts tels que des dislocations ou des insertions).

Les faces internes 12, 22 ; 12', 22' ont des plans moyens P1 et P2 qui sont parallèles à des plans cristallins du silicium dont les indices de Miller sont 1,0,0 (plan parfois désigné comme le plan (100) dans la littérature), ou 1,1,0 (plan (110)).

Par ailleurs, pour ces deux modes de réalisation, les évidements sont réalisés par un processus de gravure humide au cours duquel le substrat 10, 20 est gravé de manière anisotrope (ce processus de gravure humide anisotrope sera décrit plus bas, lors de la présentation d'un procédé de fabrication d'un tel dispositif). Avec cette technique de gravure, les facettes 16, 17 ; 16', 17', 18', 19' qui délimitent latéralement les évidements 14 ; 14' obtenus sont chacune parallèle à un plan cristallin du silicium, dont les indices de Miller sont 1,1,1 (parfois noté aussi plan (111)) ou 1,1,-1 ou 1,-1,1 ou encore -1,1,1.

Vu l'inclinaison de ces plans cristallins, par rapport au plan cristallin du silicium d'indices 1,0,0, ou 1,1,0, l'angle d'inclinaison $\alpha$ obtenu ici est égal à 54,7 degrés (il satisfait donc bien la relation F1, puisqu'il est supérieur à l'angle d'inclinaison limite $\alpha_L$, qui vaut ici 24 degrés environ).

La disposition des évidements 14 ; 14', sur les faces internes 11 ; 11' et 21 ; 21', est décrite maintenant, d'abord pour le premier mode de réalisation puis pour le deuxième mode de réalisation.

Dans le premier mode de réalisation (figures 3 et 4), les rainures 14 sont gravées parallèlement les unes aux autres, et parallèlement à l'axe transverse y.

Elles ont une même profondeur H, comprise par exemple entre 10 et 100 microns. La profondeur H désigne la profondeur de chacune de ces rainures, mesurée perpendiculairement au plan moyen P1, P2 de la face interne 12, 22 dans laquelle est gravée la rainure 14 (La profondeur H est la distance entre le plan moyen P1, P2 et le fond, c'est-à-dire l'arrête, de la rainure en V).

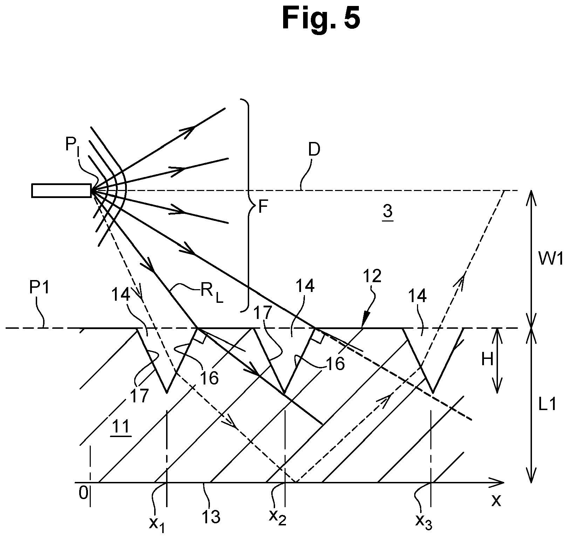

Les positions des rainures 14 sur la face interne 12 sont repérées, le long de l'axe longitudinal x, par des coordonnées $x_1$, ..., $x_i$, $x_{i+1}$, ... L'indice entier i correspond au numéro de la rainure considérée. La première rainure, d'indice i=1, est celle qui est la plus proche du point d'injection $P_I$ du faisceau lumineux (voir la figure 5). La coordonnée $x_i$ repère plus précisément la position du fond la rainure numéro i, le long de l'axe longitudinal x, dont l'origine O est située au droit du point d'injection $P_I$.

La première rainure, d'indice i=1, est positionnée sur la face interne 12, en fonction de l'ouverture angulaire du faisceau lumineux F dans le plan (x,z), de manière à ce que le rayon lumineux limite, situé à la limite inférieure du faisceau lumineux F, rencontre la facette 16 de cette première rainure. Ce rayon lumineux limite est, parmi les rayons lumineux du faisceau lumineux F, celui qui est le plus proche du plan moyen P1 (l'intensité lumineuse au niveau de ce rayon limite étant par exemple égale à la moitié du maximum de l'intensité lumineuse dans le faisceau lumineux F).

Il est ensuite souhaitable de positionner les rainures 14 à proximité les unes des autres, avec un espacement relativement réduit, de manière à réduire les dimensions des portions de la face interne 12 qui sont parallèles à la face externe 13. En effet, lorsqu'un rayon du faisceau lumineux F rencontre la face interne 12 au niveau d'une telle portion, parallèle à la face externe 13, ce rayon sort de la chambre, puis du dispositif, et ne participe plus à l'échauffement de la substance gazeuse à caractériser (comme avec un dispositif sans évidements).

Mais, d'un autre côté, si les rainures sont trop proches les unes des autres, un rayon lumineux réfracté par la facette 16 de l'une des rainures peut atteindre la rainure suivante et être réfléchi par celle-ci, au lieu de se réfléchir sur la face externe 13. Dans ce cas, le rayon lumineux peut être dévié vers l'arrière par réflexion sur la rainure suivante, en direction de la source, ce rayon lumineux ne participant alors plus, là encore, à l'échauffement de la substance gazeuse à caractériser.

Il est donc souhaitable que les rainures 14 ne soient ni trop espacées les unes des autres, ni trop proches les unes des autres. On peut alors prévoir de disposer les rainures de sorte que deux rainures 14, dont les positions $x_{i+1}$ et $x_i$ selon l'axe longitudinal x se suivent immédiatement, soient espacées, le long de cet axe longitudinal x, d'une distance $d_i=x_{i+i}-x_i$ qui soit égale, à 20% près, voire mieux, à la quantité $d_{i,opt}$ définie par la formule F6 suivante :

$$d_{i,opt} = H\left[\frac{1}{tan\alpha} + tan\left[\alpha + sin^{-1}\left[cos\left[\frac{\alpha + tan^{-1}\left(\frac{W1.tan\alpha}{x_i tan\alpha + H}\right)}{n}\right]\right]\right]\right] \quad (F6).$$

Dans cette formule, la distance $W_1$ désigne la distance entre le point d'injection $P_I$ du rayonnement lumineux dans la chambre d'une part, et le plan moyen P1 de face interne 12 de la première paroi 11 d'autre part. Cette distance est mesurée perpendiculairement au plan moyen P1 (figure 5).

La distance $d_{i,opt}$ est la plus petite distance, entre les rainures i et i+1, pour laquelle les rayons lumineux, réfractés par la facette 16 de la rainure i, atteignent la face externe 13, sans rencontrer la facette 17 de la rainure i+1 (sans être rétroréfléchis par cette facette). Cette distance correspond donc à un bon compromis entre un écart qui serait trop petit (entrainant alors une rétro-réflexion d'une partie importante du rayonnement lumineux, dans la paroi 11) et un écart qui serait trop grand (augmentant alors les pertes de puissance lumineuse au niveau de la face externe 13).

Le cas $x_{i+1}-x_i=d_{i,opt}$ est représenté schématiquement sur la figure 5. Le rayon lumineux $R_L$ représenté sur cette figure est le rayon qui, parmi les rayons réfractés par la facette 16 de rainure n°1, est le plus proche de la jonction entre la facette 16 et le plan moyen P1 (en quelque sorte, il s'agit du rayon le plus haut, parmi ces rayons). Il s'agit donc du rayon qui est le plus susceptible de rencontrer la facette 17 de la rainure suivante, n°2. Dans cette situation limite, ce rayon lumineux $R_L$ passe juste sous la rainure n°2 (en étant à la limite de toucher le fond de cette rainure). C'est cette construction géométrique qui permet de déterminer l'expression de la distance $d_{i,opt,}$ donnée par la formule F6.

Sur la face interne 22 de la deuxième paroi 21, les rainures 14 sont disposées comme expliqué ci-dessus pour la face interne 12 de la première paroi 11, mais en remplaçant la distance $W_1$ par une distance $W_2$, dans la formule F6, $W_2$ étant la distance entre le point d'injection $P_I$ et le plan moyen P2 de face interne 22 de la deuxième paroi 21.

Dans ce mode de réalisation, les faces latérales internes 33 et 34 de la chambre 3, qui sont parallèles au plan (x,z), sont dépourvues de rainures. Mais, en variante, on pourrait toutefois prévoir de graver aussi sur ces faces latérales des rainures en V, chaque rainure étant par exemple parallèle à l'axe normal z. Par ailleurs, en variante, on pourrait prévoir que seule l'une des deux faces internes 12 et 22 soit gravée de rainures, au lieu, comme ici, de graver ces deux faces internes.

Dans le deuxième mode de réalisation (figures 6 et 7), les pyramides 14' sont gravées de manière à ce que, pour chaque pyramide, deux des côtés de la base (carrée) de la pyramide soient parallèles à l'axe longitudinal x, les deux autres côtés de cette base étant parallèles à l'axe transverse y. Les pyramides 14' sont donc disposées de manière à ce que les côtés de leurs bases respectives soient parallèles les uns aux autres, d'une pyramide à l'autre.

Sur chacune des deux faces internes 12' et 22', les évidements en forme pyramides 14' sont disposés par ailleurs de manière à être alignés les uns avec les autres (figure 6). Ces évidement 14' sont donc disposés en lignes et en colonnes, sur chacune des deux faces internes 12' et 22' (en d'autres termes, les évidements sont disposés aux nœuds d'un réseau rectangulaire). Sur les figures 6 et 7, pour des raisons de clarté, toutes les pyramides 14' ne sont pas représentées.

La profondeur, H, des différents évidements 14' est la même que précédemment. Dans ce cas, la profondeur H désigne la distance entre le plan moyen P1, ou P2, et le sommet de la pyramide 14' considérée.

Les positions des pyramides 14' sur la face interne 12' sont repérées, le long de l'axe longitudinal x, par des coordonnées $x_1$, ..., $x_i$, $x_{i+1}$, ... , et, le long de l'axe transverse y, par des coordonnées $y_{-j}$,..., $y_0$ ..., $y_j$, $y_{j+1}$, .... Les indices entiers i et j correspondent respectivement au numéro de colonne et au numéro de ligne de la pyramide considérée. La pyramide, d'indices i=1 et j=0, est celle qui est la plus proche du point d'injection $P_I$ du faisceau lumineux. Le couple de coordonnées $(x_i,y_j)$ repère plus précisément la position du sommet de la pyramide 14' considérée, d'indices i et j, le long des axes x et y, dont l'origine commune O est située au droit du point d'injection $P_I$.

La ligne de pyramides 14' pour lesquelles j=0 (ligne centrale) est située ici dans l'alignement du point d'injection $P_I$. La première colonne de pyramides 14' (celles pour lesquelles i=1) est positionnée sur la face interne 12' en fonction de l'ouverture angulaire du faisceau lumineux F' dans le plan (x,z), de manière à ce que le rayon lumineux limite, situé à la limite inférieure du faisceau lumineux F', rencontre la facette 16 de la pyramide 14' d'indices i=1, j=0.

Comme pour le premier mode de réalisation, les évidements 14' sont disposés, sur la face interne 12', de manière à ce que deux évidements 14' (ici deux pyramides 14') dont les positions $x_{i+1}$ et $x_i$ selon l'axe longitudinal x se suivent immédiatement (i.e. : évidement d'indices (i,j), et, respectivement, d'indices (i+1,j)), soient espacés, le long de cet axe longitudinal x, d'une distance $d_i=x_{i+1}-x_i$ qui soit égale, à 20% près, voire mieux, à la quantité $d_{i,opt}$ définie par la formule F6 donnée plus haut. Dans ce deuxième mode de réalisation, la distance $W_1$ qui intervient dans la formule F6 désigne, là encore, la distance entre le point d'injection $P_I$ et le plan moyen P1 de face interne 12' de la première paroi 11'.

Comme expliqué pour le premier mode de réalisation, espacer ainsi les évidements 14' permet, dans la chambre, d'obtenir une puissance lumineuse moyenne élevée puisque cet espacement limite les éventuelles rétro-réflexions à l'intérieur de la première paroi 11', tout en correspondant à une densité d'évidements assez importante sur la face interne 12' (ce qui limite les pertes lumineuses latérales, au niveau de la face externe 13).

Pour les mêmes raisons, les évidements 14' sont disposés, sur la face interne 12', de manière à ce que deux évidements 14' dont les positions $y_{j+1}$ et $y_j$ selon l'axe transverse y se suivent immédiatement (i.e. évidement d'indices (i,j), et d'indices (i,j+1) respectivement), soient espacés, le long de cet axe transverse y, d'une distance $d_j=y_{j+1}-y_j$ qui soit égale, à 20% près, voire mieux, à la quantité $d_{j,opt}$ définie par la formule F7 suivante :

$$d_{j,opt} = H\left[\frac{1}{tan\alpha} + tan\left[\alpha + sin^{-1}\left[cos\left[\frac{\alpha + tan^{-1}\left(\frac{W1.tan\alpha}{y_j tan\alpha + H}\right)}{n}\right]\right]\right]\right] \quad (F7).$$

Sur la face interne 22' de la deuxième paroi 21', les pyramides 14' sont disposées comme expliqué ci-dessus pour la face interne 12' de la première paroi 11', mais en remplaçant la distance $W_1$ par une distance $W_2$, dans les formules F6 et F7, $W_2$ étant la distance entre le point d'injection $P_I$ et le plan moyen P2 de face interne 22' de la deuxième paroi 21'.

Réaliser les évidements 14' sous la forme de pyramides creuses est bien adapté à la géométrie que présente le faisceau lumineux F', dans ce deuxième mode de réalisation. En effet, à la différence du premier mode de réalisation, le faisceau lumineux F' est ici assez fortement divergent, aussi bien dans une direction parallèle à l'axe normal z que dans une direction parallèle à l'axe transverse y. Certains rayons lumineux de ce faisceau peuvent donc s'écarter assez fortement du plan (x,z). Ces rayons lumineux sont alors réfractés par les facettes latérales gauche et droite 18', 19' des pyramides, au lieu d'être réfractés par les facettes avant 16' et arrière 17' de ces pyramides, ce qui permet d'obtenir des conditions de réfraction proches pour les rayons situés dans le plan (x,z) (réfractés par les facettes avant et arrière 16' et 17'), et pour les rayons qui s'écartent de ce plan (réfractés par les facettes gauche et droites 18', 19').

Dans ce deuxième mode de réalisation, les faces latérales internes 33 et 34 de la chambre 3, qui sont parallèles au plan (x,z), sont dépourvues de pyramides. Mais, en variante, on pourrait toutefois prévoir de graver aussi sur ces faces latérales des évidements en forme de pyramides, les côtés des bases de ces pyramides étant par exemple chacune parallèle à l'axe normal z, ou à l'axe longitudinal x. Par ailleurs, en variante, on pourrait prévoir que seule l'une des deux faces internes haute et basse 12' et 22' soit gravée de pyramides, au lieu, comme ici, de graver ces deux faces internes.

Par ailleurs, dans d'autres modes de réalisation, la face interne inférieure et/ou la face interne supérieure de la chambre pourrait être gravée de manière à présenter à la fois des rainures en V et des évidements en forme de pyramides, tels que décrits ci-dessus. Les évidements pourraient être réalisés sous une autre forme que des rainures en V ou des pyramides creuses, du moment que les évidements en question restent délimités chacun par une surface latérale qui comprend une partie, éclairée par ledit faisceau lumineux et inclinée dudit l'angle d'inclinaison a.

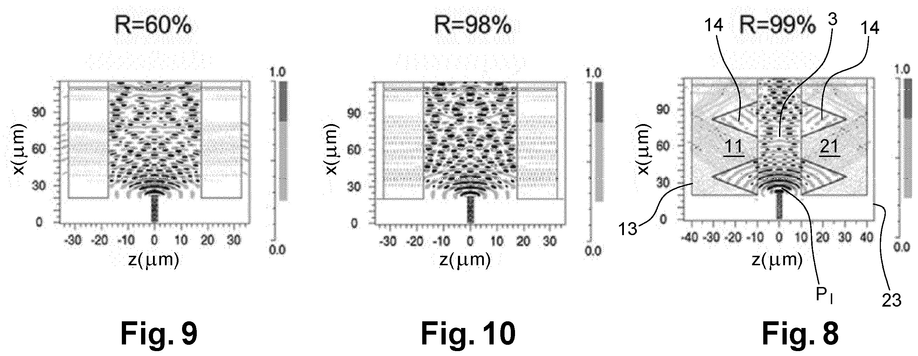

Les figures 8, 9 et 10 montrent des résultats de simulations numériques qui illustrent l'intérêt du dispositif 1 ; 1' décrit ci-dessus.

La figure 8 est une vue en coupe, selon un plan de coupe parallèle au plan (x,z), d'un dispositif similaire au dispositif 1 du premier mode de réalisation mais pour lequel l'épaisseur de la chambre est plus petite que ce qui a été indiqué ci-dessus (épaisseur de 20 microns, dans le cas de cette simulation). Les rainures en V ont quant à elles une profondeur de 20 microns. Sur cette figure, l'amplitude du champ électrique associé au rayonnement lumineux injecté dans la chambre est représenté en niveaux de gris, d'autant plus foncés que cette amplitude est grande.

La figure 9 est vue en coupe, selon un plan de coupe parallèle au plan (x,z), d'un dispositif comparable à celui de la figure 8, mais dans lequel les faces internes des première et deuxième parois sont dépourvues de rainures.

Les résultats de ces simulations ont montré que, dans le cas de la figure 8 (avec rainures), les parois de la chambre ont chacune un coefficient global de réflexion, en puissance valant environ 99%. Alors que le cas de la figure 9 (sans rainures), chacune de ces parois a un coefficient global de réflexion en puissance valant environ 60%. On peut d'ailleurs voir, sur la figure 9, qu'une partie de la puissance lumineuse injectée dans la chambre sort du dispositif par les faces externes des parois de la chambre.

La figure 10 est une vue en coupe comparable à celles des figures 8 et 9, mais pour un dispositif dans lequel les faces internes de la chambre sont complètement planes (sans rainures) et recouvertes d'une couche en or, réfléchissante. Dans ce cas, le coefficient de réflexion en puissance est de 98% pour chaque paroi, et la puissance lumineuse injectée reste bien confinée dans la chambre. Mais, comme expliqué en préambule, l'absorption résiduelle dans la couche réfléchissante en or génère alors un bruit photo-acoustique gênant.

Ces simulations numériques, en particulier celle de la figure 8, montrent que les rainures gravées sur les faces internes de la chambre ont bien l'effet attendu : elles permettent effectivement de mieux confiner dans la chambre 3 la puissance lumineuse injectée (par rapport à des faces internes planes et sans revêtement réfléchissant), et cela par réflexion totale interne, donc sans absorption résiduelle.

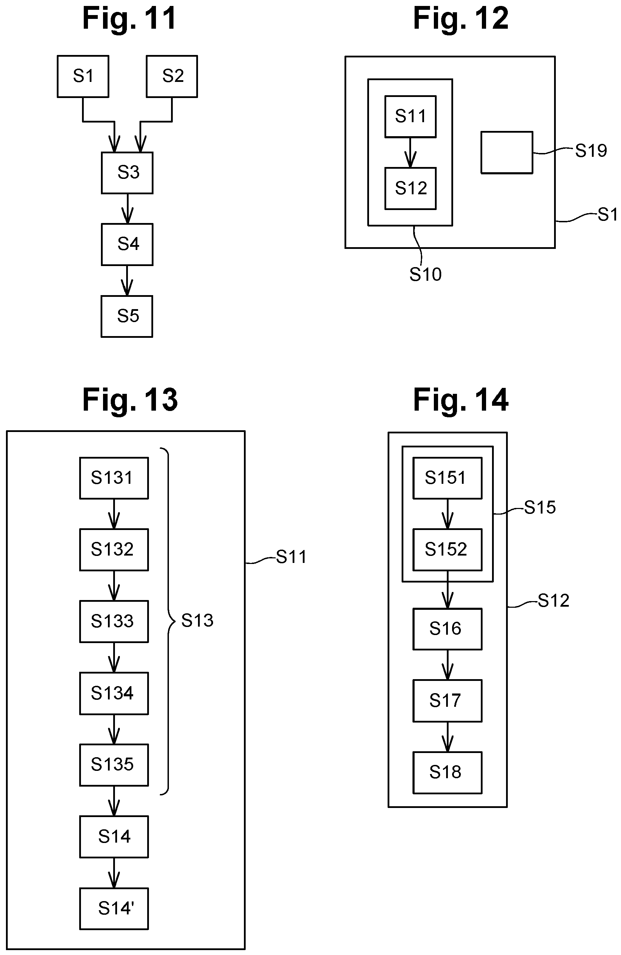

Un procédé, permettant de réaliser un dispositif pour la caractérisation photo-acoustique d'une substance gazeuse, tel que dispositif 1, ou 1', décrit plus haut, est décrit maintenant, en référence aux figures 11 à 21.

Ce procédé comprend ici les étapes suivantes, représentées schématiquement sur la figure 11 :

- S1 : structuration du premier substrat 10,

- S2 : structuration du deuxième substrat 20,

- S3 : une fois les étapes S1 et S2 réalisées, scellement du deuxième substrat 20 sur le premier substrat 10,

- S4 : amincissement du dispositif 1 ; 1', à l'épaisseur souhaitée,

- S5 : réalisation de ports fluidiques 4 pour l'amenée et l'évacuation de la substance gazeuse à caractériser, et réalisation de ports 5 pour le passage, vers un ou plusieurs microphones, de l'onde acoustique générée dans la chambre.

La figure 21 représente schématiquement le dispositif 1, tel qu'il est obtenu à l'issu de l'étape S5, vu de côté (coupe selon le plan (x,z)).

Avant structuration, chacun des deux substrats 10 et 20 est un substrat de silicium monocristallin, dont les faces sont parallèles à un plan cristallin dont les indices de Miller sont 1,0,0 ou 1,1,0, et qui peut être poli soit sur une seule face (substrat du type « SSP », selon l'acronyme anglo-saxon de « single-side polished »), soit sur les deux faces (substrat du type « DSP », ou « double-side polished », permettant d'obtenir un dispositif dont la structure est encore mieux définie). Chacun de ces substrats a par exemple une épaisseur (standard) de 725 microns, initialement.

La source lumineuse 2 est réalisée ici par structuration d'une partie du premier substrat 10, lors d'une étape S19 de l'étape S1 (figure 12).

L'étape S1 comprend par ailleurs une étape S10 de réalisation de la demi-cavité inférieure 31 de la chambre 3, par gravure du premier substrat 10.

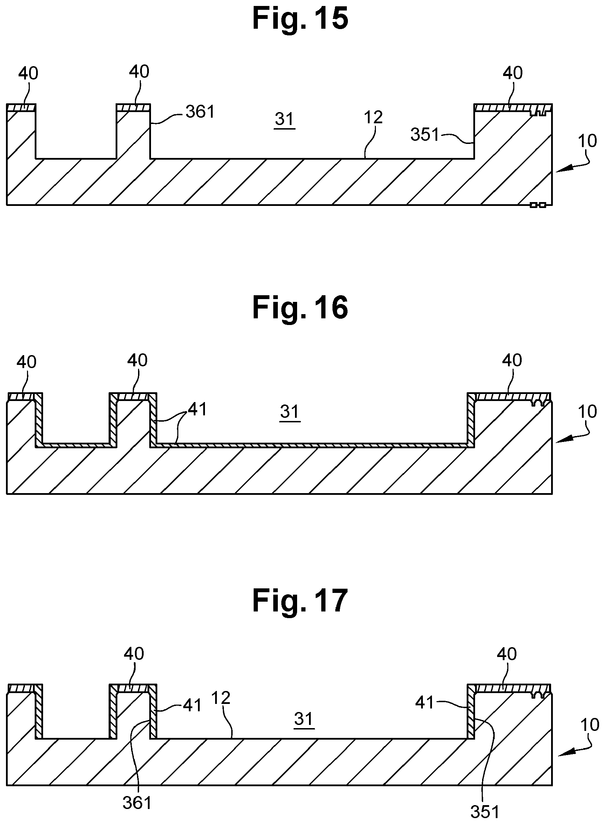

C'est cette étape S10 qui est maintenant décrite en détail, en référence aux figures 12 à 20. Les figures 12 à 14 représentent schématiquement des enchainements d'opérations réalisées au cours de l'étape S10, tandis que les figures 15 à 20 montrent le premier substrat 10 à différents stades de la réalisation de la demi-cavité 31.

Comme on peut le voir sur la figure 12, l'étape S10 de réalisation de la demi-cavité inférieure 31 comprend ici :

- une étape S11 de gravure profonde du premier substrat 10, pour définir le volume intérieure de la demi-cavité inférieure 31, puis

- une étape S12 de réalisation des évidements 14 ; 14', sur le fond 12 ; 12' de cette demi-cavité.

Comme déjà indiqué, c'est le fond de la demi-cavité inférieure 31 qui forme ici la face interne 12 ; 12' de la première paroi 11, mentionnée plus haut lors de la description du dispositif 1 ; 1'.

L'étape S11 de gravure profonde du premier substrat 10 peut être exécutée en réalisant les étapes suivantes (figure 13) :

- S13 : réalisation d'un masque dur 40, qui s'étend autour d'une surface qui, après gravure, formera l'ouverture supérieure de la demi-cavité 31,

- S14 : gravure profonde du substrat, à travers ce masque dur 40 (figure 15), et

- S14' : retrait d'une couche de polymère, déposée précédemment sur les faces de la demi-cavité au cours de l'étape de gravure profonde S14.

La gravure réalisée à l'étape S14 est une gravure sèche profonde, directive (anisotrope), par exemple de type DRIE (selon l'acronyme anglo-saxon de « Deep Reactive-Ion Etching »). Cette gravure est réalisée sur une profondeur comprise par exemple entre 300 et 450 microns, profondeur qui sera celle de la demi-cavité 31 obtenue finalement.

Le masque dur 40 réalisé à l'étape S13 peut être un masque en silice SiO2, ayant une épaisseur de quelques microns d'épaisseur, par exemple comprise entre 3 et 4,5 microns, pour les profondeurs de gravure indiquées ci-dessus. Cette épaisseur permet de donner au masque dur une résistance à la gravure DRIE suffisante pour graver en profondeur le premier substrat 10 (sur une profondeur de 300 à 450 microns environ), sans faire totalement disparaitre ce masque (qui protège les parties du substrat qui ne sont pas à graver).

L'étape S13 peut par exemple comprendre les étapes suivantes (figure 13) :

- S131 : dépôt d'une couche de silice SiO2 de quelques microns d'épaisseur (par exemple de 3 microns d'épaisseur ; ce dépôt peut par exemple être un dépôt chimique en phase vapeur assisté par plasma, ou « PECVD » - pour « Plasma-Enhanced Chemical Vapor Déposition » - , la source de silicium utilisée pour le dépôt étant par exemple du tetraethoxysilane, ou « TEOS »), puis

- S132 : dépôt d'une résine photosensible, ici une résine positive, sur la couche de silice, puis

- S133 : photolithographie de la résine (insolation, développement, et retrait de la résine insolée), pour définir les zones de la couche de silice à graver, puis

- S134 : gravure de la couche de silice, puis

- S135 : retrait de la résine photosensible restante.

La figure 15 montre schématiquement le premier substrat 10, vu de côté, après l'étape S11 de gravure profonde. Après cette étape, la demi-cavité inférieure 31 est délimitée par son fond 12 et par des faces latérales, par exemple au nombre de quatre (si la chambre a un fond rectangulaire). Deux de ces faces latérales, 351, 361, sont visibles sur la figure 15.

Pour ce qui est de l'étape S12 de réalisation des évidements 14 ; 14', elle comprend ici les étapes suivantes (figure 14) :

- S15 : réalisation d'une couche de protection 41 qui recouvre les différentes faces latérales (351 et 361 notamment) de la demi-cavité 31 (figures 16 et 17), puis

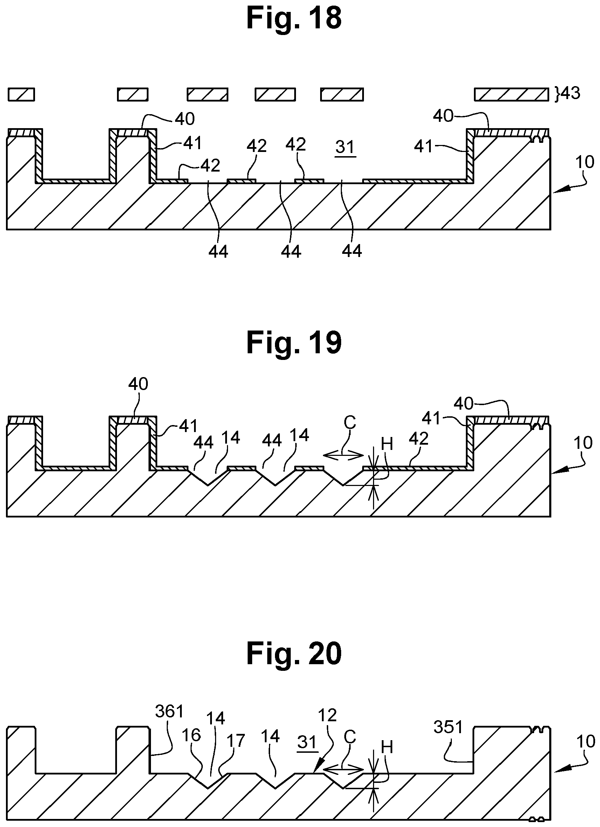

- S16 : dépôt d'un masque de protection 42, sur le fond 12 de la demi-cavité 31, le masque de protection 42 étant déposé à travers un pochoir 43 et comprenant des orifices 44 coïncidant avec les ouvertures des évidements 14 ; 14' à graver (figure 18), puis

- S17 : gravure humide du substrat, à travers le masque de protection 42, par action de potasse KOH ou du tetramethylammonium hydroxide TMAH, pour graver les évidements 14 ; 14', puis

- S18 : retrait du masque de protection 42 et de la couche de protection 41.

Le masque de protection 42 et la couche de protection 41 sont formés ici de nitrure de silicium $Si_3N_4$, ce qui leur confère une bonne résistance à la gravure humide réalisée à l'étape S17.

L'étape S15 peut par exemple comprendre les opérations suivantes :

- S151 : dépôt de nitrure de silicium $Si_3N_4$, sur l'ensemble des faces latérales et du fond de la demi-cavité 31, par dépôt chimique en phase vapeur réalisé à basse pression (pression sous-atmosphérique ; dépôt du type LPCVD, selon l'acronyme anglo-saxon de « Low-pressure Chemical Vapor Déposition), puis

- S152 : élimination du nitrure de silicium $Si_3N_4$ déposé sur le fond 12 de la demi-cavité 31, par gravure sèche de type RIE (« Reactive ion Etching »).

La figure 16 montre schématiquement le substrat 10, juste après l'opération de dépôt S151. La figure 17 montre ce substrat juste après le retrait du nitrure de silicium qui avait été déposé sur le fond 12.

A l'étape S16, le pochoir 43 employé est par exemple un pochoir métallique, ou un pochoir en silicium. Les dimensions des motifs présents sur ce pochoir sont choisies en fonction des dimensions souhaitées pour les orifices 44 du masque de protection 42.

Les dimensions des orifices 44 présents dans le masque de protection 42 sont choisies en fonction des dimensions souhaitées pour les ouvertures des évidements 14 ; 14' (elles sont égales aux dimensions souhaitées pour les ouvertures des évidements 14 ; 14'). Par exemple, si l'on souhaite obtenir des rainures en V ayant une largeur de 28 microns (dans la plan moyen P1), on réalisera le masque de protection de manière à ce qu'il présente des orifices en forme de bandes rectilignes, ayant aussi une largeur C de 28 microns.

Pour ce qui est de la profondeur H des évidements 14 ; 14' gravés dans le substrat 10, elle est en quelque sorte auto-limitée, et dépend directement des dimensions des orifices 44, par exemple de leur largeur C. En effet, la gravure humide du silicium par la potasse ou par le TMAH est anisotrope, et les faces obtenues après gravure, qui délimitent latéralement les évidements 14 ; 14', correspondent à des plans cristallins dont les indices de Miller sont 1,1,1 ou 1,1,-1, ou 1,-1,1, ou -1,1,1 (la densité d'atomes dans ces plans cristallins est plus grande que dans les plans cristallins d'indice 1,1,0 et 1,0,0; la gravure est donc moins rapide dans une direction perpendiculaire à l'un des plans 1,1,1, ou 1,1,-1, ou 1,-1,1, ou -1,1,1, ce qui explique que les faces qui subsistent après gravure aient l'orientation indiquée ci-dessus).

Comme déjà indiqué, les faces latérales des évidements sont donc inclinées de 54,7 degrés par rapport au plan moyen P1 de la face interne 12 (vu les orientations respectives des plans cristallins mentionnés ci-dessus). Pour des orifices 44 en forme de bandes rectilignes, de largeur C, la profondeur H des rainures en V sera donc auto-limitée à $(C/2) \times \tan(\alpha) = (C/2) \times \tan(54,7°)$. Ainsi, si l'on souhaite obtenir une profondeur H de 20 microns, par exemple, on déposera alors un masque de protection dont les orifices, en forme de bandes, ont une largeur C de 28,3 microns.

Pour ce qui est l'étape de gravure humide S17, elle est par exemple réalisée conformément aux indications données dans la section 2.2 « gravure chimique » du document « Micro-usinage des matériaux monocristallins », par Jean-Sébastien DANEL, Techniques de l'ingénieur, article BM 7 290, juillet 1998.

Enfin, à l'étape S18, le retrait du masque de protection 42 et de la couche de protection 41 peut être réalisé par une attaque chimique à l'acide fluorhydrique HF, par exemple. Au cours de cette étape, le masque dur 40 est également retiré (par l'attaque chimique en question).

La demi-cavité supérieure 32, réalisée dans le deuxième substrat 20 au cours de l'étape S2, est réalisée de la même manière que la demi-cavité inférieure 31, par la même séquence d'étapes. La demi-cavité supérieure 32 peut néanmoins avoir une profondeur différente de celle de la demi-cavité inférieure 31, et les évidements peuvent être agencés différemment sur le fond 22 de la demi-cavité supérieure 32, et sur le fond 12 de la demi-cavité inférieure 31.

Une fois que les deux demi-cavités 31 et 32 ont été réalisées, les premier et deuxième substrats 10 et 20 sont scellés l'un sur l'autre, à l'étape S3. Ce scellement est réalisé par collage direct des substrats 10 et 20 l'un sur l'autre. Préalablement, les substrats 10 et 20 sont nettoyés pour être exempts d'impuretés (qui peuvent être d'origine particulaire, organique et/ou ionique). Ce nettoyage peut être un nettoyage chimique humide, un nettoyage par rayonnement ultraviolet et ozone, ou être réalisé par traitement par plasma. Avant de les sceller, les substrats 10 et 20 sont positionnés l'un par rapport à l'autre de sorte que la demi-cavité inférieure 31 et la demi-cavité supérieure 32 soient situées en regard l'une de l'autre, c'est-à-dire en vis-à-vis l'une de l'autre (chaque paroi latérale de la demi-cavité supérieure s'étendant alors dans le prolongement de l'une des parois latérales de la cavité inférieure). Cet alignement est réalisé au moyen de marques d'alignement, réalisées sur chacun des deux substrats 10 et 20 au début de leur processus de structuration.

Sur la figure 21, on peut voir le dispositif 1, après scellement des deux substrats 10 et 20 l'un sur l'autre, et après l'étape S5 de réalisation des ports fluidiques 4 et des ports pour microphones 5. On notera que cette figure, destinée à illustrer la structure générale du dispositif après scellement, est très schématique : elle n'est pas nécessairement à l'échelle, et toutes les parties du dispositif ne sont pas nécessairement représentées sur cette figure (c'est d'ailleurs aussi le cas pour les figures 3 à 7).

Différentes variantes peuvent être apportées au procédé de fabrication qui vient d'être décrit. Ce procédé peut en particulier comprendre des étapes ou sous-étapes supplémentaires, avant ou après le scellement des deux substrats. Certaines étapes pourraient être réalisées différemment de ce qui a été décrit ci-dessus.

Par exemple, le masque de protection qui recouvre le fond de la demi-cavité considérée, pour la protéger lors de la gravure humide, pourrait être réalisé par photolithographie (par exemple de type Spray) au lieu d'être déposé à travers un pochoir. Cette variante est toutefois assez délicate à mettre en œuvre et requiert des systèmes de photolithographie particuliers. En effet, les orifices 44 présents dans le masque de protection doivent alors être définis par photolithographie en fond de cavité, à une profondeur importante par rapport à la face supérieure du substrat (généralement plus de 300 microns), ce qui rend la focalisation du faisceau lumineux de lithographie délicate.

**Revendications**

**1.** Dispositif (1 ; 1') pour la caractérisation photo-acoustique d'une substance gazeuse, le dispositif comprenant :

- une source lumineuse (2), émettant un rayonnement lumineux, et
- une chambre (3) destinée à contenir la substance gazeuse à caractériser, la chambre étant délimitée notamment par une première paroi (11, 21 ; 11', 21'), formée dans un matériau au moins partiellement transparent pour ledit rayonnement, ladite paroi (11, 21 ; 11', 21') ayant :

  ∘ une face interne (12, 22 ; 12', 22'), sensiblement plane, située du côté de la chambre, et
  ∘ une face externe (13, 23), la majeure partie de la face externe étant plane, contenue dans un même plan, et sensiblement parallèle à un plan moyen (P1, P2) de la face interne (12, 22 ; 12', 22'),

- la source lumineuse (2) étant associée optiquement à la chambre (3) de manière à injecter ledit rayonnement lumineux dans la chambre, sous la forme d'un faisceau lumineux (F ;F'), une partie au moins du faisceau lumineux (F ; F') se réfléchissant sur la face interne (12, 22 ; 12', 22') de la première paroi,

le dispositif (1 ; 1') étant **caractérisé en ce que** la face interne (12, 22 ; 12', 22') de la première paroi est gravée de manière à présenter des évidements (14 ; 14'), chaque évidement étant délimité latéralement par une surface latérale (15 ; 15'), une partie (16; 16', 17, 19') de ladite surface latérale, qui est éclairée par ledit faisceau lumineux (F ; F'), étant inclinée, par rapport au plan moyen (P1, P2) de ladite face interne (12, 22 ; 12', 22'), d'un angle d'inclinaison α qui satisfait l'inégalité suivante :

$$\alpha - \sin^{-1}\left(\frac{\sin \alpha}{n}\right) > i_C$$

où ic est l'angle critique de réflexion totale interne dans ledit matériau et où n est l'indice optique dudit matériau.

**2.** Dispositif (1 ; 1') selon la revendication précédente dans lequel la surface latérale (15 ;15') qui délimite l'évidement (14 ;14') considéré est formée de plusieurs facettes (16, 17 ; 16', 17', 18', 19') planes, pour au moins certains desdits évidements.

**3.** Dispositif (1 ; 1') selon la revendication précédente dans lequel chacune desdites facettes (16, 17 ; 16', 17', 18', 19') est inclinée, par rapport au plan moyen (P1, P2) de ladite face interne (12, 22 ; 12', 22'), dudit angle d'inclinaison α.

**4.** Dispositif (1) selon la revendication 2 ou 3, dans lequel au moins certains desdits évidements, dont la surface latérale (15) est formée de plusieurs facettes (16, 17) planes, sont réalisés sous la forme de rainures (14) rectilignes ayant une section en forme de V.

**5.** Dispositif (1) selon la revendication 4, dans lequel lesdites rainures (14) sont parallèles entre elles, et dans lequel chacune desdites rainures s'étend le long d'un axe transverse (y) qui forme, avec une direction moyenne de propagation (D) du faisceau lumineux (F) injecté dans la chambre (3), un angle compris entre 70 et 90 degrés.

**6.** Dispositif (1') selon l'une des revendications 2 à 5, dans lequel au moins certains desdits évidements, dont la surface latérale (15') est formée de plusieurs facettes (16', 17', 18', 19') planes, ont une forme de pyramide (14') creuse à base carrée ou rectangulaire.

**7.** Dispositif (1') selon la revendication 6, dans lequel lesdites pyramides (14') sont disposées chacune de sorte que l'un des côtés de leur base soit parallèle à un même axe transverse (y), et dans lequel cet axe transverse (y) forme, avec une direction moyenne de propagation (D) du faisceau lumineux (F') injecté dans la chambre (3), un angle compris entre 70 et 90 degrés.

**8.** Dispositif (1 ; 1') selon la revendication 5 ou 7, dans lequel lesdites rainures (14), ou lesdites pyramides (14'), sont disposées de sorte que deux rainures (14), ou deux pyramides (14'), situées l'une à la suite de l'autre le long d'un axe longitudinal (x), soient espacées, le long de l'axe longitudinal (x), d'une distance $d_i = x_{i+1} - x_i$ qui est égale, au moins à 20% près, à la quantité $d_{i,opt}$ suivante :

$$d_{i,opt} = H \left[ \frac{1}{\tan\alpha} + \tan\left[ \alpha + \sin^{-1}\left[ \cos\left[ \frac{\alpha + \tan^{-1}\left(\frac{W.\tan\alpha}{x_i\tan\alpha + H}\right)}{n} \right] \right] \right] \right]$$

où

- les coordonnées $x_i$ et $x_{i+1}$ repèrent les positions respectives, le long de l'axe longitudinal, des deux fonds desdites deux rainures en V (14), ou repèrent les positions respectives, le long de l'axe longitudinal (x), des deux sommets desdites deux pyramides (14'),

- l'axe longitudinal (x), qui est orthogonal audit axe transverse (y) et qui est contenu dans le plan moyen (P1, P2) de ladite face interne (12, 22 ; 12', 22'), a une origine qui est située au droit d'un point d'injection (P$_I$) dudit rayonnement lumineux,

- H est la profondeur des rainures en V (14), ou des pyramides (14'), mesurée perpendiculairement au plan moyen (P1, P2) de ladite face interne, et

- W est la distance entre le point d'injection (P$_I$) du rayonnement lumineux et le plan moyen (P1, P2) de ladite face interne, mesurée perpendiculairement audit plan moyen.

9. Dispositif (1 ; 1') selon l'une quelconque des revendications 2 à 8, dans lequel la première paroi (11, 21 ; 11', 21') est formée dans un substrat (10, 20) essentiellement monocristallin, dans lequel le plan moyen (P1, P2) de ladite face interne (12, 22 ; 12', 22'), et lesdites facettes (16, 17 ; 16', 17', 18', 19') planes, sont parallèles à différents plans cristallins dudit substrat.

10. Dispositif (1 ; 1') selon la revendication précédente, dans lequel le substrat (10, 20) est formé de silicium, dans lequel le plan moyen (P1, P2) de ladite face interne est parallèle à un plan cristallin dont les indices de Miller sont 1,0,0 ou 1,1,0 et dans lequel lesdites facettes (16, 17 ; 16', 17', 18', 19') sont parallèles à des plans cristallins dont les indices de Miller sont 1,1,1, ou 1,1,-1, ou 1,-1,1 ou -1,1,1.

11. Dispositif (1; 1') selon l'une quelconque des revendications précédentes, dans lequel la chambre (3) est délimitée également par une deuxième paroi (21, 11 ; 21', 11') formée dans ledit matériau, la deuxième paroi ayant une face interne (22, 12 ; 22', 12'), sensiblement plane, située du côté de la chambre (3), et une face externe (23, 13), sensiblement plane et parallèle à la face interne de la deuxième paroi, la face interne (22, 12 ; 22', 12') de la deuxième paroi étant gravée de manière à présenter elle aussi des évidements (14 ;14'), chaque évidement étant délimité latéralement par une surface latérale (15 ;15'), une partie (16 ;16',18',19') de ladite surface latérale, qui est éclairée par ledit faisceau lumineux (F ;F'), étant inclinée, par rapport à un plan moyen (P2, P1) de la face interne (22, 12 ; 22', 12') de la deuxième paroi, dudit angle d'inclinaison a.

12. Procédé de fabrication d'un dispositif (1; 1') pour la caractérisation photo-acoustique d'une substance gazeuse, le procédé comprenant les étapes suivantes :

- réalisation d'une chambre (3) destinée à contenir la substance gazeuse à caractériser, la chambre (3) étant délimitée notamment par une première paroi (11, 21 ; 11', 21'), formée dans un matériau, ladite paroi ayant une face interne (12, 22 ; 12', 22'), sensiblement plane et située du côté de la chambre, ainsi qu'une face externe (13, 23), la majeure partie de la face externe étant plane, contenue dans un même plan, et sensiblement parallèle à un plan moyen (P1, P2) de ladite face interne,

- réalisation (S19), ou montage sur le dispositif, d'une source lumineuse (2), émettant un rayonnement lumineux, la source lumineuse étant associée optiquement à la chambre (3) de manière à injecter ledit rayonnement lumineux dans la chambre, sous la forme d'un faisceau lumineux (F ;F'), une partie au moins du faisceau lumineux se réfléchissant sur la face interne (12, 22 ; 12', 22') de la première paroi,

**caractérisé en ce que** l'étape de réalisation de la chambre comprend une étape (S12) de réalisation d'évidements (14 ;14'), gravés sur la face interne (12, 22 ; 12', 22') de la première paroi, chaque évidement étant délimité latéralement par une surface latérale (15 ; 15'), une partie (16 ; 16', 17', 19') de ladite surface latérale, qui est éclairée par ledit faisceau lumineux (F ; F'), étant inclinée, par rapport au plan moyen (P1, P2) de ladite face interne (12, 22 ; 12', 22'), d'un angle d'inclinaison $\alpha$ qui satisfait l'inégalité suivante :

$$\alpha - \sin^{-1}\left(\frac{\sin\alpha}{n}\right) > i_C$$

où ic est l'angle critique de réflexion totale interne dans ledit matériau et où n est l'indice optique dudit matériau.

13. Procédé selon la revendication précédente, dans lequel la première paroi (11, 21 ; 11', 21') est formée dans un premier substrat (10, 20), et dans lequel l'étape de réalisation de la chambre comprend une étape (S11) de gravure d'une demi-cavité (31, 32), dans le premier substrat (10, 20), la demi-cavité ayant un fond formant ladite face interne (12, 22 ; 12', 22'), l'étape (S12) de réalisation desdits évidements étant exécutée après l'étape (S11) de gravure de la demi-cavité (31, 32).

**14.** Procédé selon la revendication précédente, dans lequel le premier substrat (10, 20) est formé de silicium essentiellement monocristallin, dans lequel le fond (12, 22 ; 12', 22') de cavité est parallèle à un plan cristallin dont les indices de Miller sont 1,0,0 ou 1,1,0, et dans lequel l'étape (S12) de réalisation desdits évidements comprend les opérations suivantes :

- réalisation (S15) d'une couche de protection (41) recouvrant des faces latérales (351, 361) de la ladite demi-cavité (31, 32),
- dépôt (S16) d'un masque de protection (42) sur le fond de ladite demi-cavité (31, 32), le masque étant déposé à travers un pochoir (43) et comprenant des orifices (44) coïncidant avec les ouvertures des évidements (14 ;14') à graver,
- gravure humide (S17) du premier substrat (10, 20), par action de potasse ou de tetramethylammonium hydroxide,
- retrait (S18) du masque de protection (42) et de la souche de protection (41).

**15.** Procédé selon la revendication 13 ou 14 dans lequel,

- la chambre (3) étant délimitée en outre par une deuxième paroi (21, 11 ; 21', 11'), qui est formée dans un deuxième substrat (20, 10) fait dudit matériau, la deuxième paroi ayant une face interne (22, 12 ; 22', 12'), sensiblement plane, située du côté de la chambre, et une face externe (23, 13), sensiblement plane et parallèle à la face interne de la deuxième paroi,

l'étape de réalisation de la chambre comprend en outre :

- une étape de réalisation d'évidements (14 ;14'), gravés sur la face interne (22, 12 ; 22', 12') de la deuxième paroi, chaque évidement étant délimité latéralement par une surface latérale, une partie de ladite surface latérale, qui est éclairée par ledit faisceau lumineux, étant inclinée, par rapport à un plan moyen de la face interne de la deuxième paroi, dudit angle d'inclinaison a, et
- un scellement (S3) du deuxième substrat (20, 10) sur le premier substrat (10, 20), de manière à ce que les faces internes respectives de la première paroi (11, 21 ;11', 21') et de la deuxième paroi (21, 11 ; 21', 11') soient situées en vis-à-vis l'une de l'autre, de part et d'autre de la chambre (3).

# Fig. 1

# Fig. 2

# Fig. 3

# Fig. 4

# Fig. 5

# Fig. 6

# Fig. 7

Fig. 8

Fig. 10

Fig. 9

# Fig. 11

# Fig. 12

# Fig. 13

# Fig. 14

## Fig. 15

## Fig. 16

## Fig. 17

# Fig. 18

}43
40
41
42  42  42  31
40
41
10
44  44  44

# Fig. 19

40
41
44  14  44  14
C
H
41
40
42
10

# Fig. 20

361
16  14  17  14  31  12
C
H
351
10

# Fig. 21

Europäisches
Patentamt

European
Patent Office

Office européen
des brevets

# RAPPORT DE RECHERCHE EUROPEENNE

Numéro de la demande

EP 20 21 1536

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 02/088698 A1 (YAMATAKE CORP [JP]; FUJIWARA HISATOSHI [JP] ET AL.) 7 novembre 2002 (2002-11-07) | 1-7,9, 10,12-14 | INV. G01N29/22 G01N29/32 |
| Y | * alinéas [0009] - [0014], [0025] - [0048], [0063] - [0064]; figures 1-3C, 6 * ----- | 1-7,9-15 | G01N29/032 G01N29/24 |
| Y | WO 2009/007875 A2 (KONINKL PHILIPS ELECTRONICS NV [NL]; PRESURA CRISTIAN N [NL] ET AL.) 15 janvier 2009 (2009-01-15) * page 5, lignes 5-10; figure 1 * ----- | 1-7,9-15 | |
| Y | GB 2 190 998 A (BRUEEL & KJAER AS) 2 décembre 1987 (1987-12-02) * le document en entier * ----- | 11,15 | |

DOMAINES TECHNIQUES RECHERCHES (IPC)

G01N

Le présent rapport a été établi pour toutes les revendications

| Lieu de la recherche | Date d'achèvement de la recherche | Examinateur |
|---|---|---|
| Munich | 23 avril 2021 | Roetsch, Patrice |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
..................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 21 1536

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-04-2021

| Document brevet cité au rapport de recherche | | | Date de publication | Membre(s) de la famille de brevet(s) | | | Date de publication |
|---|---|---|---|---|---|---|---|
| WO | 02088698 | A1 | 07-11-2002 | JP | 2002328116 | A | 15-11-2002 |
| | | | | WO | 02088698 | A1 | 07-11-2002 |
| WO | 2009007875 | A2 | 15-01-2009 | CN | 101688827 | A | 31-03-2010 |
| | | | | EP | 2165176 | A2 | 24-03-2010 |
| | | | | US | 2010192669 | A1 | 05-08-2010 |
| | | | | WO | 2009007875 | A2 | 15-01-2009 |
| GB | 2190998 | A | 02-12-1987 | CH | 674264 | A5 | 15-05-1990 |
| | | | | DE | 3716763 | A1 | 03-12-1987 |
| | | | | FR | 2599505 | A1 | 04-12-1987 |
| | | | | GB | 2190998 | A | 02-12-1987 |
| | | | | JP | S62291544 | A | 18-12-1987 |
| | | | | US | 4818882 | A | 04-04-1989 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3019653

**Littérature non-brevet citée dans la description**

- **JEAN-SÉBASTIEN DANEL.** Micro-usinage des matériaux monocristallins. *Techniques de l'ingénieur,* Juillet 1998